# EUROPEAN PATENT APPLICATION

(11) **EP 2 957 993 A1**
(43) Date of publication of application: **23.12.2015**
(21) Application number: 15172725.2
(22) Date of filing: 18.06.2015
(51) Int. Cl.: G06F 3/01, G06F 3/042

(54) **DETECTING DEVICE AND INPUT DEVICE**

(30) Priority: 20.06.2014 JP 2014126962; 16.06.2015 JP 2015120911
(71) Applicant: Funai Electric Co., Ltd., Daito-shi, Osaka 574-0013 (JP)
(72) Inventor: Izukawa, Shintaro, Daito-shi, Osaka 574-0013 (JP)
(74) Representative: Global IP Europe Patentanwaltskanzlei

(57) **Abstract**

A detecting device includes an irradiation component that includes a first light source and irradiates a specific region with light from the first light source, a light receiver that receives light reflected in the specific region, and a controller that performs an operation control of the irradiation component based on a specific criterion with respect to the light received by the light receiver.

## Description

### CROSS-REFERENCE TO RELATED APPLICATIONS

This application claims priority to Japanese Patent Application Nos. 2014-126962 filed on June 20, 2014 and 2015-120911 filed on June 16, 2015. The entire disclosures of Japanese Patent Application Nos. 2014-126962 and 2015-120911 are hereby incorporated herein by reference.

### BACKGROUND

### Field of the Invention

This invention generally relates to a detecting device, and to an input device having the same.

### Background Information

Detecting devices for detecting a finger or other indictor (detection target) in space have been proposed in the art for touchless control panels, three-dimensional input devices, and so forth. Japanese Laid-Open Patent Application Publication No. 2010-12158 (Patent Literature 1), for example, discloses prior art related to such a detecting device.

The detecting device discussed in Patent Literature 1 makes use of an imaging element or an infrared sensor to detect a finger or other such detection target pointed midair over a control panel. This allows input to the control panel to be performed without contact, and prevents the device from being soiled by input operations.

### SUMMARY

Nevertheless, the imaging element used in the above-mentioned detecting device has poor responsiveness, and there is the possibility that the control panel will end up being touched. An infrared sensor requires a plurality of light emitters and light receivers, and also requires a frame on which these are installed, and there is the possibility that a finger or the like will touch the sensor or frame.

Meanwhile, an infrared laser can be used as a way to deal with these problems with responsiveness and installation. However, when an infrared laser is used, although infrared rays are at a safe level even if they go into the user's eyes, some safety measure is needed to ensure that the laser beam will not go into the eyes for an extended period of time.

The present invention is conceived in light of the above situation, and it is an object thereof to provide a detecting device with improved safety, such that light used for detecting a detection target will not go into the user's eyes for an extended period of time, as well as an input device that is equipped with this detecting device.

In view of the state of the known technology and in accordance with a preferred embodiment, a detecting device comprises an irradiation component including a first light source and configured to irradiate a specific region with light from the first light source, a light receiver configured to receive light reflected in the specific region, and a controller configured to perform an operation control of the irradiation component based on a specific criterion with respect to the light received by the light receiver.

In accordance with another preferred embodiment according to the detecting device mentioned above, the irradiation component is configured to use the light of the first light source to perform an optical scan with respect to the specific region, and the controller is configured to perform the operation control of the irradiation component when a specific criterion with respect to the light received by the light receiver has been satisfied in a plurality of optical scans by the irradiation component.

In accordance with another preferred embodiment according to any one of the detecting device mentioned above, the controller is configured to release the operation control of the irradiation component when a specific criterion with respect to the light received by the light receiver has been satisfied.

In accordance with another preferred embodiment according to any one of the detecting device mentioned above, the detecting device further comprises a second light source configured to emit light toward the specific region, the controller being configured to turn on the second light source when performing the operation control of the irradiation component, and the controller being configured to release the operation control of the irradiation component and configured to turn off the second light source if there is a disparity in an amount of light of the first light source received by the light receiver.

In accordance with another preferred embodiment according to any one of the detecting device mentioned above, the second light source is disposed outside of the irradiation component at a different location from that of the first light source.

In accordance with another preferred embodiment according to any one of the detecting device mentioned above, the second light source is disposed opposite the light receiver with the specific region therebetween.

In accordance with another preferred embodiment according to any one of the detecting device mentioned above, the operation control of the irradiation component includes reducing an amount of light emitted by the irradiation component.

In accordance with another preferred embodiment according to any one of the detecting device mentioned above, the operation control of the irradiation component includes stopping emission of light by the irradiation component.

In accordance with another preferred embodiment according to any one of the detecting device mentioned above, the operation control of the irradiation component includes stopping emission of light by the irradiation component after reducing an amount of light emitted by the irradiation component.

In accordance with another preferred embodiment according to any one of the detecting device mentioned above, the specific criterion with respect to the light received by the light receiver includes a light reception time of the light receiver.

In accordance with another preferred embodiment according to any one of the detecting device mentioned above, the specific criterion with respect to the light received by the light receiver includes a cumulative amount of light received by the light receiver.

In accordance with another preferred embodiment according to any one of the detecting device mentioned above, if a plurality of beams of light have been reflected in the specific region, the controller is configured to perform the operation control of the irradiation component based on light that satisfies a specific criterion out of the plurality of beams of light received by the light receiver.

In accordance with another preferred embodiment according to any one of the detecting device mentioned above, the controller is configured to cause the irradiation component to irradiate a range that is smaller than the specific region.

In accordance with another preferred embodiment according to any one of the detecting device mentioned above, the detecting device further comprises a first light receiver configured to receive light reflected in the specific region, and a second light receiver configured to receive light reflected in a region other than the specific region.

In accordance with another preferred embodiment, an input device comprises any one of the detecting device mentioned above.

Also other objects, features, aspects and advantages of the present disclosure will become apparent to those skilled in the art from the following detailed description, which, taken in conjunction with the annexed drawings, discloses one embodiment of the detecting device and the input device.

### BRIEF DESCRIPTION OF THE DRAWINGS

Referring now to the attached drawings which form a part of this original disclosure:
FIG. 1 is a simplified configuration diagram of an input device in a first embodiment;
FIG. 2 is a diagram illustrating a detection operation performed by a detecting device in the first embodiment;
FIG. 3 is a graph of a detection signal produced by the detecting device in the first embodiment;
FIG. 4 is a flowchart of the detection operation performed by the detecting device in the first embodiment;
FIG. 5 is a diagram illustrating the detection operation performed by the detecting device in the first embodiment, illustrating an abnormal detection state;
FIG. 6 is a graph of the detection signal produced by the detecting device in the first embodiment, illustrating the abnormal detection state;
FIG. 7 is a flowchart of a detection operation performed by a detecting device in a second embodiment;
FIG. 8 is a flowchart of a detection operation performed by a detecting device in a third embodiment;
FIG. 9 is a simplified configuration diagram of an input device in a fourth embodiment;
FIG. 10 is a flowchart of a detection operation performed by a detecting device in the fourth embodiment;
FIG. 11 is a diagram illustrating the detection operation performed by the detecting device in the fourth embodiment;
FIG. 12 is a graph of a detection signal produced by the detecting device in the fourth embodiment;
FIG. 13 is a simplified configuration diagram of an input device in a fifth embodiment;
FIG. 14 is a diagram illustrating a detection operation performed by a detecting device in the fifth embodiment;
FIG. 15 is a graph of a detection signal produced by the detecting device in the fifth embodiment.
FIG. 16 is a graph of a detection signal and the amount of laser light produced by a detecting device in a sixth embodiment;
FIG. 17 is a graph of a detection signal produced by a detecting device in a seventh embodiment, illustrating an abnormal detection state;
FIG. 18 is a graph of a detection signal produced by a detecting device in an eighth embodiment, illustrating an abnormal detection state;
FIG. 19 is a diagram illustrating a detection operation performed by a detecting device in a ninth embodiment; and
FIG. 20 is a simplified diagram of the configuration of an input device in a tenth embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

### FIRST EMBODIMENT

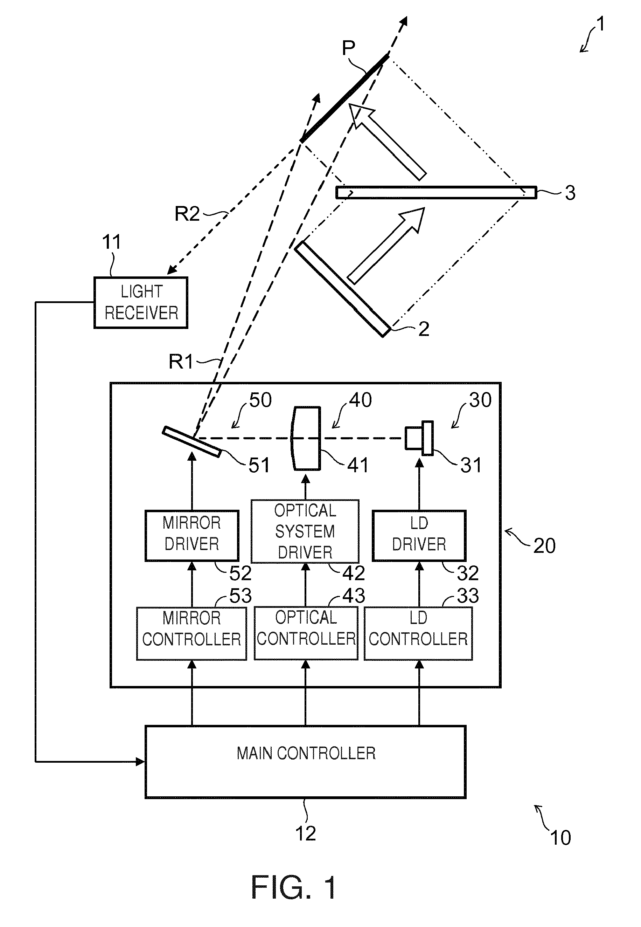

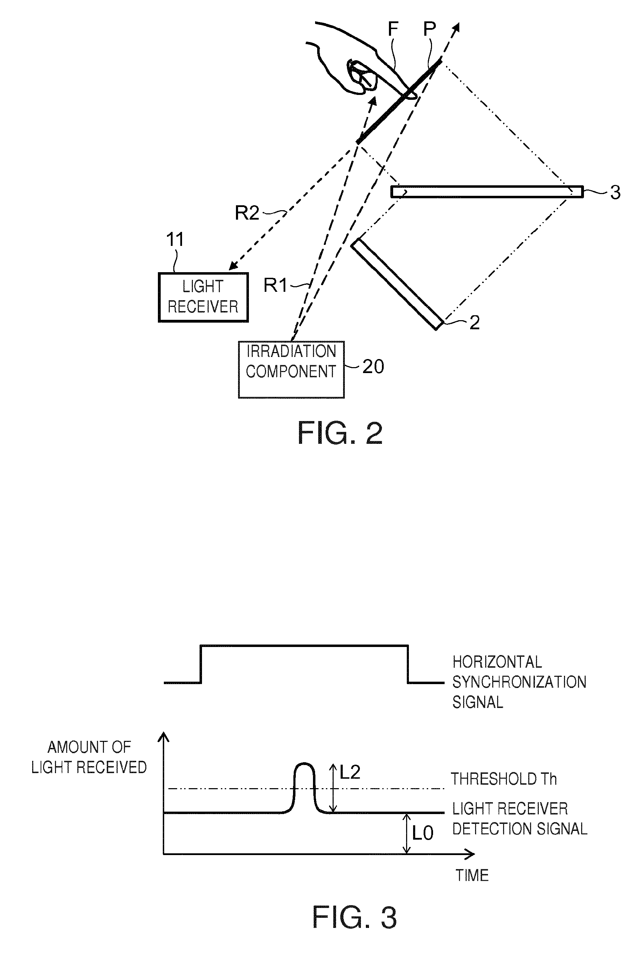

First, a detecting device 10 and an input device 1 of the first embodiment will be described through reference to FIGS. 1 to 3. FIG. 1 is a simplified configuration diagram of the input device 1. FIGS. 2 and 3 are a diagram illustrating the detection operation performed by the detecting device 10, and a graph of the detection signal.

As shown in FIG. 1, an input device 1 comprises a video display component 2, a midair projection panel 3, and a detecting device 10. The input device 1 is a three-dimensional type of input device, and projects a midair image P that includes a control panel into a specific region in the air. The input device 1 receives input operations by detecting a finger or other such detection target pointed at the control panel.

The video display component 2 displays an image that is the basis of the midair image P including the control panel that is displayed in the air, according to an application that receives input operations. This image that is the basis for the midair image P is produced by a main controller 12 (discussed below), or by a video processor (not shown). The midair projection panel 3 produces the midair image P by projecting the image displayed by the video display component 2 toward a specific region in the air. The white arrows in FIG. 1 indicate the projection path of the midair image P.

The detecting device 10 comprises an irradiation component 20, a light receiver 11, and the main controller 12. The detecting device 10 detects as the detection target a finger or other such indicator pointed at the control panel of the midair image P.

The irradiation component 20 comprises a light emitter 30, an optical component 40 and a scanner 50. The light emitter 30 comprises an infrared laser diode (hereinafter referred to as infrared LD) 31 that is a first light source, an LD driver 32, and an LD controller 33. The optical component 40 comprises an optical system 41, an optical system driver 42, and an optical controller 43. The scanner 50 comprises a scanning mirror 51, a mirror driver 52, and a mirror controller 53. In the illustrated embodiment, the main controller 12 includes a microcomputer or processor with a control program that controls various components of the detecting device 10. The main controller 12 can also include other conventional components such as an input interface circuit, an output interface circuit, and storage devices such as a ROM (Read Only Memory) device and a RAM (Random Access Memory) device. The main controller 12 is programmable to control the various components of the detecting device 10. The internal RAM of the main controller 12 stores statuses of operational flags and various control data. The internal ROM of the main controller 12 stores the programs for various operations. It will be apparent to those skilled in the art from this disclosure that the precise structure and algorithms for the main controller 12 can be any combination of hardware and software that will carry out the functions of the present invention. Also, the LD controller 33, the optical controller 43, the mirror controller 53 can also include a microcomputer or processor in a manner similar to the main controller 12.

The infrared LD 31 is a light emitting element that emits an infrared laser beam. This light emitting element satisfies the conditions for a class 1 M laser product, for example, which is set forth in JIS C 6802:2014 "Safety Standards for Laser Products," and the wavelength band of the laser light thereof is 302.5 nm to 4000 nm. The time standard pertaining to the effect that a class 1 M laser product has on a user's eyes is given as 100 seconds. Thus, the infrared laser beam emitted by the infrared LD 31 is at a safe level even if it goes into a person's eyes, but prolonged exposure is undesirable, and less than 100 seconds is preferable if the light should happen to go into the user's eyes. The light emitting element constituting the infrared LD 31 is not limited to being a class 1 M laser product, and a light emitting element of some other standard may be used instead.

The LD driver 32 can control drive related to output, on/off switching, and so forth of the light emitted by the infrared LD 31. The LD controller 33 produces a light control signal for the infrared LD 31, and outputs this to the LD driver 32.

An optical system 41 includes, for example, a collimating lens and other such optical members. An optical system driver 42 moves the collimating lens, for example, in the optical axis direction to adjust the degree of constriction and scattering of the infrared laser beam that reaches the midair image P, the irradiation position, and so on. An optical controller 43 produces a drive control signal for controlling the operation of the optical system 41, and outputs this to the optical system driver 42.

A scanning mirror 51 can change the reflection direction of the infrared laser beam biaxially. When the scanning mirror 51 changes the reflection direction of the infrared laser beam, a scanning laser beam R1 is emitted from the irradiation component 20 toward the midair image P (the detection region).

A mirror driver 52 is a drive controller that controls the scanning mirror 51. The mirror driver 52 drives the scanning mirror 51 according to horizontal synchronization signals and vertical synchronization signals from a mirror controller 53, and deflects the reflection direction of the laser beam produced by the scanning mirror 51 to the horizontal and vertical directions.

The mirror controller 53 produces a control signal for controlling the scanning mirror 51, and outputs this to the mirror driver 52. The mirror controller 53 produces a drive waveform for the scanning mirror 51 according to the scanning region, the number of scan lines, and the frame rate that have been determined according to the midair image P, and outputs synchronization signals indicating the scanning position of the scanning mirror 51.

The light receiver 11 receives natural light from the environment in which the input device 1 is installed, and reflected light R2 of the scanning laser beam R1 emitted from the irradiation component 20 toward the midair image P. The "natural light" referred to herein includes not only light that originates naturally, such as sunlight or moonlight, but also any artificial light present in the environment other than the light emitted by the input device 1 (such as light from indoor lighting). The light receiver 11 subjects the incident light to photo-electric conversion into an electrical signal, and outputs the result. The electrical signal outputted by the light receiver 11 is sent to the main controller 12.

The irradiation component 20 and the light receiver 11 are disposed in a positional relation such that the scanning laser beam R1 emitted from the irradiation component 20 is not directly incident on the light receiver 11.

The main controller 12 uses programs, control information, and the like stored in a memory (not shown) or the like to control the various constituent elements of the input device 1. The main controller 12 outputs control signals to each of the LD controller 33, the optical controller 43, and the mirror controller 53.

FIG. 2 shows the ordinary operating state of the input device 1. The user performs an input operation by extending a finger F into the control panel of the midair image P. The scanning laser beam R1 emitted from the irradiation component 20 toward the midair image P hits the finger F and is reflected. The light receiver 11 receives the natural light of the environment in which the 1 is installed, and the reflected light R2 of the scanning laser beam R1.

FIG. 3 shows an ordinary detection signal of the light receiver 11, contrasted with a horizontal synchronization signal in optical scanning. It shows a peak protruding in the approximate center of the detection signal of the light receiver 11, contrasted with a horizontal synchronization signal in optical scanning corresponding to the location of the finger F in relation to the vertical direction of the midair image P. L0 of the detection signal of the light receiver 11 is the component attributable to natural light, while L2 is the component attributable to the reflected light R2 reflected by the detection target, including the finger F.

With the input device 1, a threshold Th with respect to the amount of light received by the light receiver 11 is stored ahead of time in a memory or the like (not shown), in relation to the detection of a detection target by the detecting device 10. If the amount of light received by the light receiver 11 exceeds this threshold Th, the main controller 12 recognizes that the finger F or another detection target has been inserted into the midair image P (the detection region). Also, the main controller 12 recognizes the horizontal position of the peak of the detection signal of the light receiver 11 based on the presence of the finger F or other detection target, by associating the detection timing thereof with the horizontal synchronization signal in optical scanning.

In this way, the input device 1 recognizes that the user has performed an input operation on the control panel of the midair image P with the finger F or the like, and the position indicated by this finger F, etc.

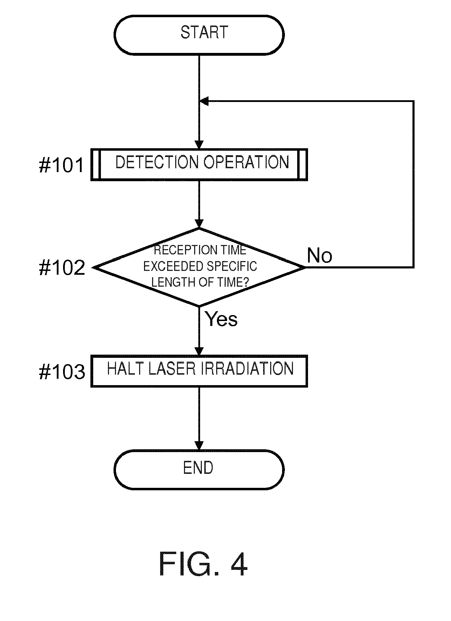

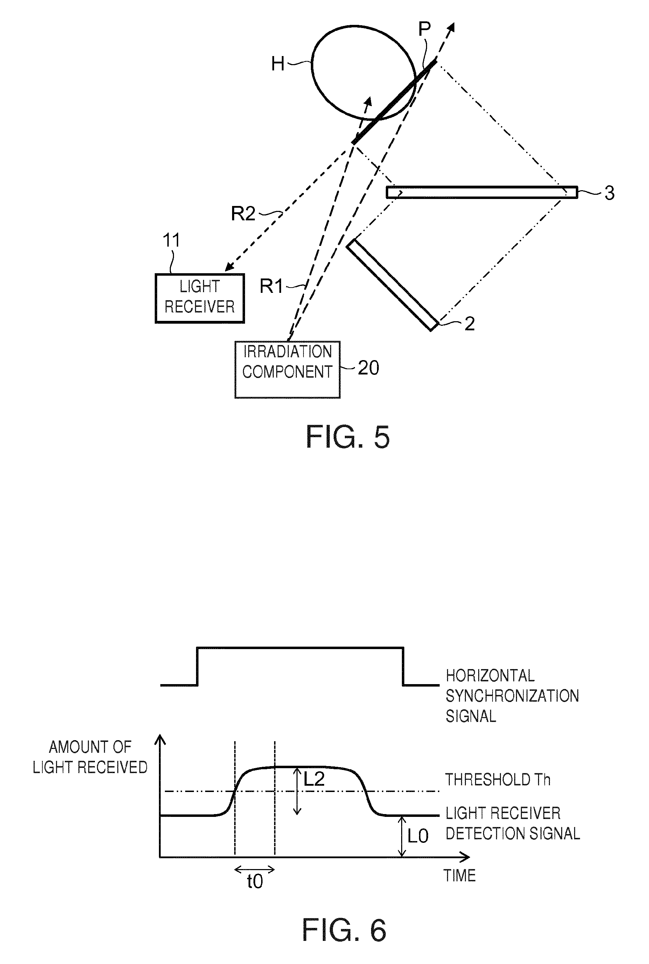

The operation involved in the detection of a detection target by the detecting device 10 will now be described through reference to FIGS. 5 and 6, following the flow shown in FIG. 4. FIG. 4 is a flowchart of the detection operation performed by the detecting device detecting device 10. FIGS. 5 and 6 are a diagram of the detection operation performed by the detecting device 10, and a graph of the detection signal, and show an abnormal detection state.

When an input operation is begun on the input device 1 (Start in FIG. 4), the operation of detecting a detection target with the detecting device 10 is begun (step #101). The main controller 12 then determines whether or not the amount of light received by the light receiver 11 exceeds the threshold Th, and the length of time that light is received exceeds a predetermined specific length of time t0 (see FIG. 6), in the detection of the detection target (step #102).

In an input operation, the reception of the reflected light R2 of the scanning laser beam R1 continuously received by the light receiver 11 when the user uses the finger F, a pointer, or the like usually takes a relatively short time. Therefore, the main controller 12 recognizes the detection target by setting as the specific length of time t0 the time it takes to detect an object the size of a fist that is larger than the finger F, pointer, or other such indicator. The specific length of time t0 is stored ahead of time in a memory or the like (not shown), and can be changed as needed. If the infrared laser beam is, for example, a class 1 M laser beam, the risk of the light going into the user's eyes is taken into account, and the specific length of time t0 is preferably set to less than 100 seconds.

Therefore, when the finger F, a pointer, or another such indicator is used, the flow returns to step #101 and the ordinary detection operation is continued, without the light reception time going past the specific length of time t0 (No in step #102).

Meanwhile, as shown in FIG. 5, for example, if the user's head H moves into the midair image P (the detection region), it is highly probable that the amount of light received by the light receiver 11 will exceed the threshold Th as shown in FIG. 6, and the reception time of the reflected light R2 received continuously will exceed the specific length of time t0 premised on the size of a fist. Consequently, if the reception time exceeds the specific length of time t0 (Yes in step #102), the main controller 12 puts a limit on light irradiation, in which the emission of the infrared laser beam by the irradiation component 20 is halted (step #103). The detection target detection operation by the detecting device 10 is then ended (End in FIG. 4).

When the detecting device 10 stops irradiation with light, a warning may be issued to the user that his head H has moved into the midair image P, by either audio or video.

As discussed above, the detecting device 10 in an embodiment of the present invention comprises the irradiation component 20 that includes the infrared LD 31 (the first light source) and that irradiates the specific region (the midair image P) with the infrared laser beam of the infrared LD 31, the light receiver 11 that receives the reflected light R2 of the infrared laser beam reflected by the specific region (the midair image P), and the main controller 12 that controls the operation of the irradiation component 20 (e.g., performs the operation control of the irradiation component 20) based on a specific criterion with respect to the reflected light R2 received by the light receiver 11.

For example, the detecting device 10 comprises the infrared LD 31 that emits light, the irradiation component 20 that irradiates the midair image P (a specific detection region in the air for detecting a detection target) with the infrared laser beam of the infrared LD 31, the light receiver 11 that receives the reflected light R2 of the infrared laser beam that has been reflected by the detection target that has moved into the midair image P, and the main controller 12 that controls the operation of the infrared LD 31 and the irradiation component 20. The main controller 12 limits irradiation with light (light irradiation), in which the emission of the infrared laser beam from the irradiation component 20 is halted, when the reception time (the light reception time) of the continuously received infrared laser beam of the infrared LD 31 by the light receiver 11 exceeds the predetermined specific length of time t0.

With this configuration, the detecting device 10 detects the finger F or another such relatively small indictor as the detection target when the reception time of the continuously received infrared laser beam of the infrared LD 31 is at or under the predetermined specific length of time t0. If the reception time has exceeded the specific length of time t0, the detecting device 10 detects that a relatively large object, such as the user's head H, has moved into the midair image P, and halts the emission of the infrared laser beam from the irradiation component 20. Therefore, if the user's head H moves in the midair image P (the detection region), the detecting device 10 can rapidly halt the mission of the infrared laser beam. As a result, it is less likely that the infrared laser beam will go into the user's eyes over a prolonged period.

Also, with the detecting device 10, control of the operation (the operation control) of the irradiation component 20 by the main controller 12 includes stopping the optical irradiation by the irradiation component 20. This configuration makes it less likely that the infrared laser beam will go into the user's eyes over an extended period of time.

Also, with the detecting device 10, the specific criterion with respect to the reflected light R2 of the infrared laser beam received by the light receiver 11 includes the reception time (light reception time) of the reflected light R2 by the light receiver 11 (the specific length of time t0). With this configuration, the fact that the user's head H has moved into the midair image P can be detected based on the reception time of the reflected light R2 by the light receiver 11, making it possible to stop irradiation with the infrared laser beam quickly.

Also, if the detecting device 10 configured as above is installed in the input device 1, it will be less likely that the infrared laser beam of the infrared LD 31 in the input device 1 will go into the user's eyes over a prolonged period. Furthermore, since the infrared laser beam of the infrared LD 31 can be used for input operation, the light source can be utilized more efficiently.

### SECOND EMBODIMENT

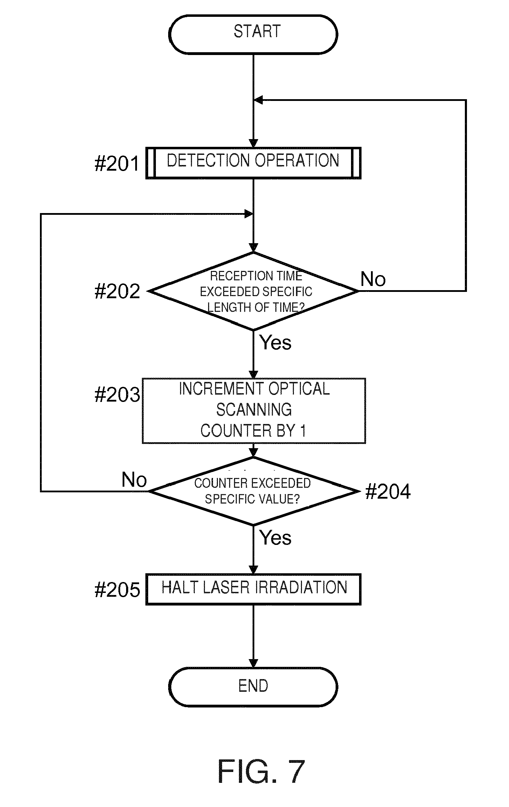

The configuration of the detecting device in a second embodiment of the present invention will now be described through reference to FIG. 7. FIG. 7 is a flowchart of the detection operation performed by the detecting device. The basic configuration in this embodiment is the same as that in the first embodiment described above, so those constituent elements that are shared with the first embodiment will be numbered the same and will not be described again.

As shown in FIG. 7, the detecting device 10 in the second embodiment is such that the main controller 12 adds one to an optical scanning counter preset to 0 (zero) (step #203), when the reception time of the infrared laser beam by the light receiver 11 has exceeded the specific length of time t0 (Yes in step #202).

The main controller 12 then determines whether or not the optical scanning counter has exceeded a predetermined specific value (step #204). The specific value pertaining to this optical scanning counter is obtained by presetting a plurality of scanning line numbers for a plurality of optical scans in the horizontal direction by the scanner 50, and storing these in a memory or the like (not shown).

If the optical scanning counter has not exceeded the specified value (No in step #204), the detection operation processing returns to step #202. Then, in step #202, if the reception time by the light receiver 11 has not exceeded the specific length of time t0 (No in step #202), the detection operation processing returns to step #201 and the optical scanning counter that has counted up to this point is reset to 0 (zero).

Specifically, since the reception time of the infrared laser beam by the light receiver 11 in the region of a plurality of scanning lines has not yet exceeded the specific length of time t0, it is concluded that the user's head H has not moved into the midair image P.

If the reception time by the continuously receiving light receiver 11 has exceeded the specific length of time t0 and the optical scanning counter has exceeded the specified value (Yes in step #204), the main controller 12 halts the emission of the infrared laser beam by the irradiation component 20 (step #205). The detection target detection operation by the detecting device 10 is then ended (End in FIG. 7).

As discussed above, with the detecting device 10, the irradiation component 20 uses the infrared laser beam of the infrared LD 31 to perform optical scanning of a specific region (the midair image P), and the main controller 12 controls the operation of the irradiation component 20 (e.g., performs the operation control of the irradiation component 20) when a specific criterion is satisfied with respect to the reflected light of the infrared laser beam received by the receiver 11 in a plurality of optical scans by the irradiation component 20.

For example, the main controller 12 halts the emission of the infrared laser beam from the irradiation component 20 when the reception time by the light receiver 11 has exceeded the specific length of time t0 in a plurality of optical scans by the scanner 50 of the irradiation component 20. With this configuration, the detection accuracy of the detecting device 10 can be improved. Therefore, mis-detection is less likely to occur, and it can be more accurately detected that the user's head H has moved into the midair image P (the detection region).

The emission of the infrared laser beam may be halted when the reception time of the infrared laser beam by the light receiver 11 has exceeded the specific length of time t0 over a number of frames (screens) of optical scanning. Also, the reception time of the light receiver 11 may be monitored in time series for each frame of optical scanning, and the emission of the infrared laser beam quickly halted if the reception time of the light receiver 11 gradually approaches the specific length of time t0.

### THIRD EMBODIMENT

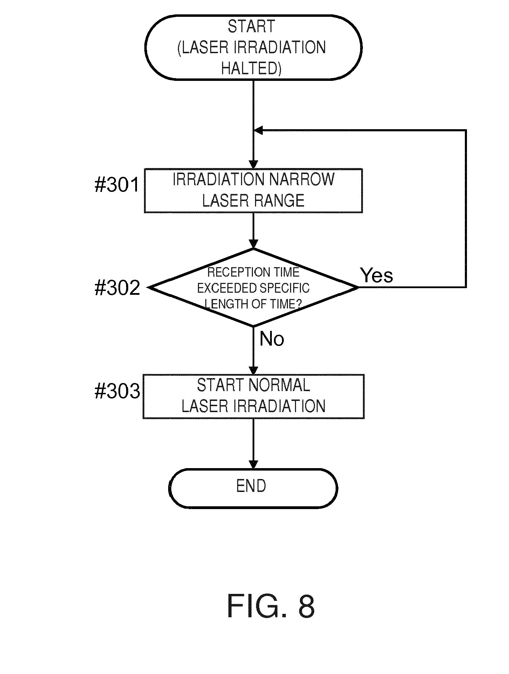

The configuration of the detecting device in a third embodiment of the present invention will now be described through reference to FIG. 8. FIG. 8 is a flowchart of the detection operation performed by the detecting device. The basic configuration in this embodiment is the same as that in the first embodiment described above, so those constituent elements that are shared with the first embodiment will be numbered the same and will not be described again. In regard to this, the process of halting the emission of the infrared laser beam is the same as in the first and second embodiments, and will therefore not be described again.

The distinctive feature in the configuration of the detecting device 10 in the third embodiment is that the flow returns to normal detection operation after it is detected, for example, that the user's head H has moved into the midair image P, and the emission of the infrared laser beam by the irradiation component 20 has been halted.

When irradiation with the infrared laser beam by the irradiation component 20 is halted (Start in FIG. 8), the main controller 12 causes the irradiation component 20 to irradiate over a range that is narrower than the usual detection region (step #301). At this point, the main controller 12 controls the scanner 50 so that the infrared laser beam is scanned over a region of a plurality of scanning lines corresponding to the region in which the user's head H was detected, for example. The infrared laser beam may also irradiate in frame (screen) units or in dots.

The range that is narrower than the usual detection region for the range irradiated with the infrared laser beam encompasses a case in which irradiation with the infrared laser beam of the upper region out of the normal detection region is halted so as not to affect the user's eyes, and only the lower region is irradiated with the infrared laser beam, for example. Conversely, just the upper region out of the normal detection region may be irradiated with the infrared laser beam, and irradiation of the lower region with the infrared laser beam may be halted.

Next, the main controller 12 determines whether or not the reception time of the infrared laser beam by the light receiver 11 has exceeded the specific length of time t0 (step #302). If the user's head H is still in the midair image P, the reception time of the infrared laser beam by the light receiver 11 is unchanged from the state shown in FIG. 6. Therefore, when the reception time has exceeded the specific length of time t0 (Yes in step #302), the flow returns to step #301, and the main controller 12 causes the infrared laser beam to be emitted again. A waiting period may be provided at this point before the infrared laser beam is emitted again.

On the other hand, if the user's head H has been retracted from the midair image P, the light receiver 11 no longer receives the infrared laser beam. That is, if the reception time of the infrared laser beam by the light receiver 11 has not exceeded the specific length of time t0 (No in step #302), the main controller 12 causes the irradiation component 20 to start emitting the infrared laser beam as normal (step #303).

The operation pertaining to restoring normal detection operation after the user's head H has entered the midair image P and the irradiation with the infrared laser beam has been halted is then ended (End in FIG. 8).

As discussed above, the main controller 12 releases the operation control of the irradiation component 20 when a specific criterion with respect to the light received by the light receiver 11 has been satisfied. For example, after the main controller 12 stops irradiation with the infrared laser beam by the irradiation component 20, it causes the irradiation component 20 to emit the infrared laser beam over a range that is narrower than the ordinary detection region (a range that is smaller than the specific region), and if the reception time of the infrared laser beam that is continuously received by the light receiver 11 is at or under the specific length of time t0, the irradiation component 20 is caused to release the stop on irradiating with the infrared laser beam, and normal irradiation with the infrared laser beam is resumed. With this configuration, the detecting device 10 waits for the user's head H to move out of the midair image P (a specific detection region), and then restarts normal irradiation with the infrared laser beam by the irradiation component 20. Therefore, safety is enhanced, and the normal detection operation can be resumed quickly.

In the first, second, and third embodiments, limitation of the emission of the infrared laser beam by the irradiation component 20 when the reception time of the infrared laser beam of the infrared LD 31 continuously received by the light receiver 11 exceeded the predetermined specific length of time t0 was described as halting irradiation with the infrared laser beam. However, in a modification example of the third embodiment, the irradiation component 20 may directly emit the infrared laser beam over a range that is narrower than the normal detection region, rather than temporarily halting the emission of the infrared laser beam from the irradiation component 20 after the reception time of the reception time of the infrared laser beam of the infrared LD 31 continuously received by the light receiver 11 has exceeded the predetermined specific length of time t0.

### FOURTH EMBODIMENT

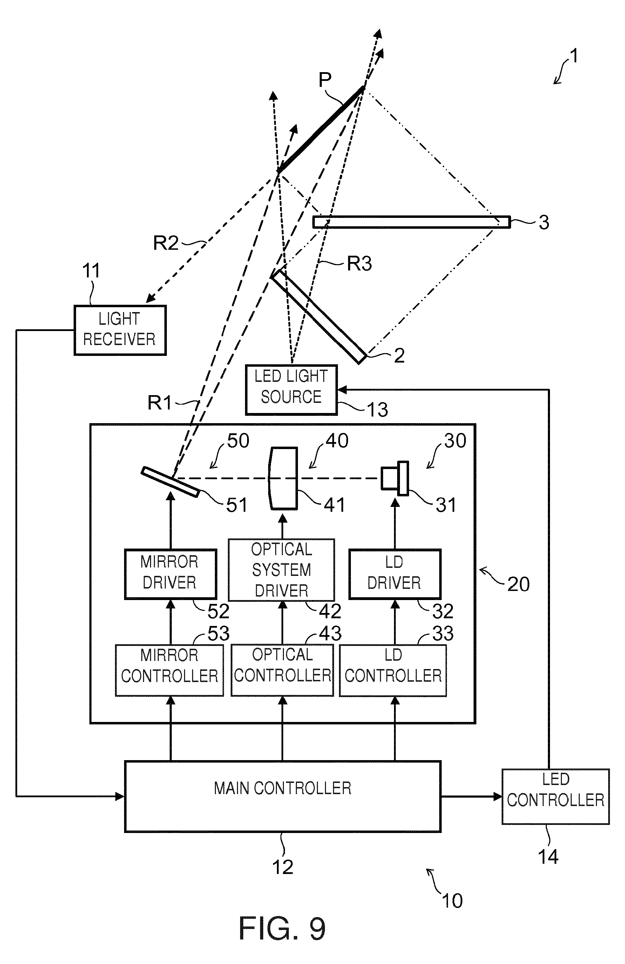

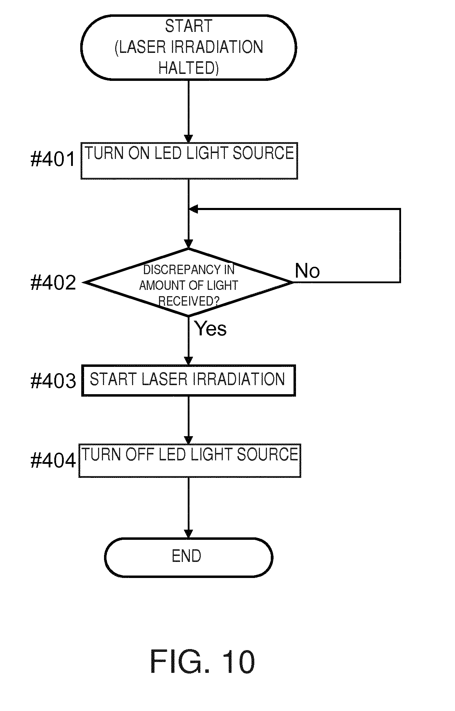

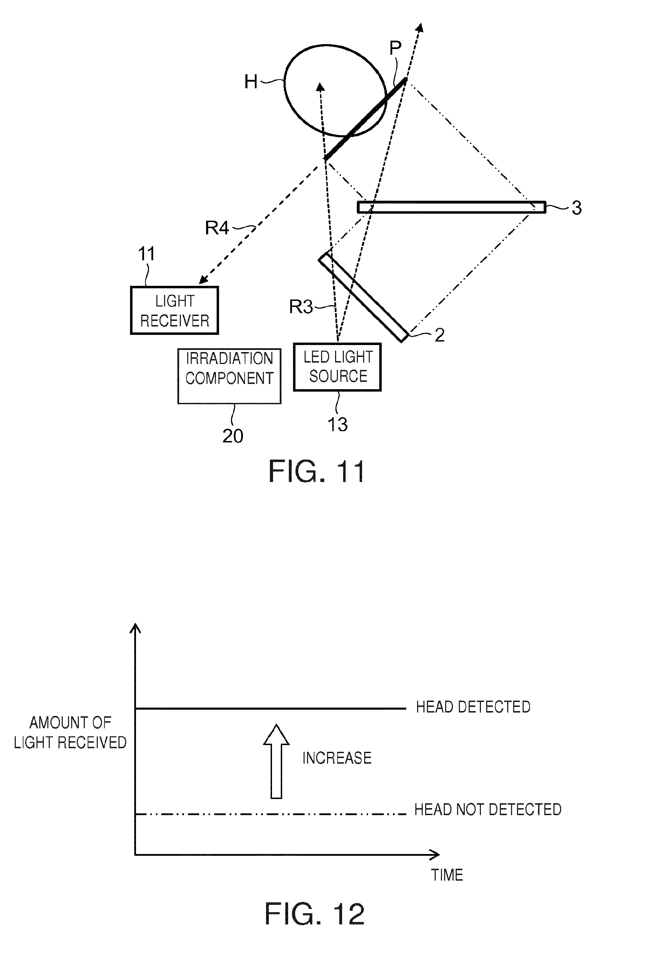

The configuration of the detecting device and input device in a fourth embodiment of the present invention will now be described through reference to FIGS. 9 to 12. FIG. 9 is a simplified configuration diagram of the input device, and FIG. 10 is a flowchart of the detection operation performed by the detecting device. FIGS. 11 and 12 are a diagram illustrating the detection operation performed by the detecting device, and a graph of the detection signal, in which an abnormal detection state is shown. The basis configuration of this embodiment is the same as that of the first embodiment described above, so those constituent elements that are shared with the first embodiment will be numbered the same and will not be described again.

As shown in FIG. 9, the detecting device 10 in the fourth embodiment comprises an LED light source 13, which is a second light source. This light source is not limited to being an LED (light emitting diode), and may instead be some other type of light source. Also, this light source may emit infrared light, visible light, or the like. Drive of the LED light source 13 related to switching light emission on and off, output, and so forth is controlled based on a control signal outputted by the main controller 12 via an LED controller 14.

The LED light source 13, which is the second light source, is disposed on the outside of the irradiation component 20, and is disposed at a different position from that of the infrared LD 31, which is the first light source.

The LED light source 13 emits LED light R3 toward the midair image P (the detection region). The LED light source 13 is disposed in a positional relation with respect to the light receiver 11 in which the LED light R3 is not directly incident on the light receiver 11, so that reflected light R4 (see FIG. 11) of the LED light R3 that has been reflected by a detection target that has moved into the midair image P will be incident on the light receiver 11. The LED light source 13 is used in returning to normal detection operation after it has been detected that the user's head H, for example, has moved into the midair image P, and irradiation with the infrared laser beam by the irradiation component 20 has been halted.

The operation for detecting a detection target with the detecting device 10 will now be described through reference to FIGS. 11 and 12, following the flow shown in FIG. 10.

The detecting device 10 here has pre-stored in a memory or the like (not shown) the amount of light received by the light receiver 11 (see FIG. 12) when the LED light source 13 is lit and a relatively large detection target such as the user's head H is present in the midair image P, that is, when no detection target is detected. For instance, as shown in FIG. 11, if the user's head H moves into the midair image P, the reflected light R4 of the LED light R3 that has hit and been reflected by the head H is received by the light receiver 11. Specifically, the amount of light received by the light receiver 11 increases as shown in FIG. 12 when the user's head H is detected.

When irradiation with the infrared laser beam by the irradiation component 20 is halted (Start in FIG. 10), the main controller 12 lights the LED light source 13 (step #401). Since detection of the user's head H halts the emission of the infrared laser beam, when the LED light source 13 is lit in step #401, the amount of light received by the light receiver 11 increases as shown in FIG. 12.

The main controller 12 then determines whether or not there is a disparity in the amount of light received by the light receiver 11 (step #402). If the user's head H is still in the midair image P, the amount of light received by the light receiver 11 will be unchanged from the increased state shown in FIG. 12. Thus, if there is no disparity in the amount of light received by the light receiver (No in step #402), the main controller 12 continues monitoring whether or not there is a disparity in the amount of light received by the light receiver 11 in a state in which the LED light source 13 is still lit.

On the other hand, when the user's head H is retracted from the midair image P, the amount of light received by the light receiver 11 changes to a state in which no detection target (such as the head H) is detected, as shown in FIG. 12. Therefore, if there is a disparity in the amount of light received by the light receiver 11 (Yes in step #402), the main controller 12 causes the irradiation component 20 to resume normal emission of the infrared laser beam (step #403). The main controller 12 also turns off the LED light source 13 (step #404).

Then, after the user's head H, for example, moves into the midair image P and the emission of the infrared laser beam is halted, the operation related to resuming normal detection operation is ended (End in FIG. 10).

As discussed above, the detecting device 10 comprises the LED light source 13 that emits the LED light R3 toward the midair image P (the detection region) so that the reflected light R4 will be incident on the light receiver 11. When the main controller 12 controls the operation (performs the operation control) of the irradiation component 20, that is, after irradiation with the infrared laser beam by the irradiation component 20 is stopped, the LED light source 13 is turned on. Also, if there is a disparity in the amount of reflected light R4 of the LED light R3 received by the light receiver 11, control over the operation (the operation control) of the irradiation component 20 is released, that is, normal irradiation with the infrared laser beam by the irradiation component 20 is resumed, and the LED light source 13 is turned off.

With these configurations, in order to resume normal emission of the infrared laser beam by the irradiation component 20, the detecting device 10 can utilize the LED light source 13, which is an extra light source, to detect that the user's head H, for example, has retracted from the midair image P (a specific detection region). Therefore, normal detection operation can be resumed even more quickly.

### FIFTH EMBODIMENT

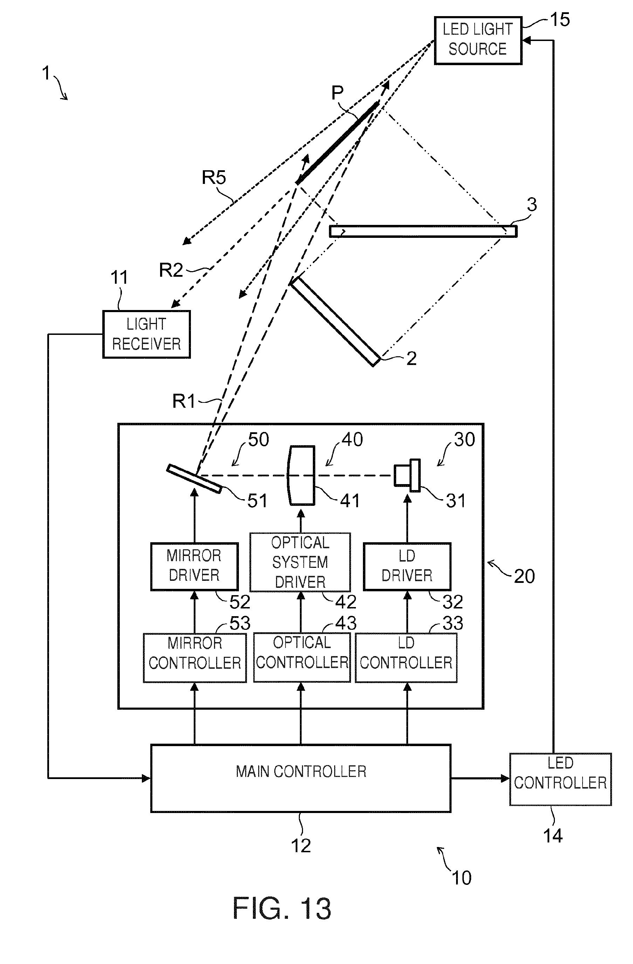

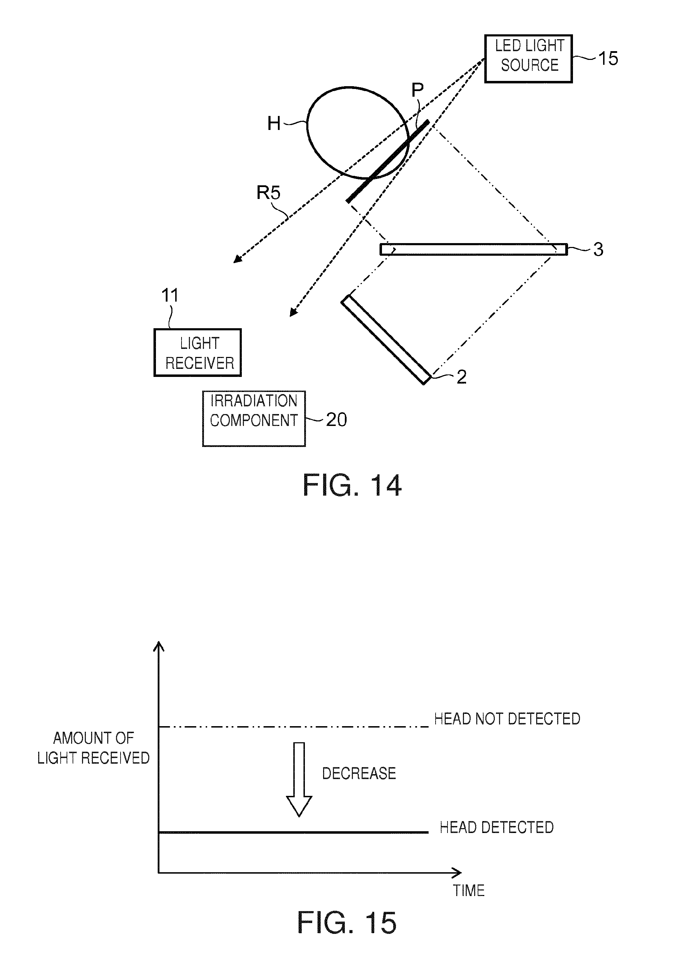

The configuration of the detecting device and input device in a fifth embodiment of the present invention will now be described through reference to FIGS. 13 to 15. FIG. 13 is a simplified diagram of the configuration of an input device. FIGS. 14 and 15 are a diagram illustrating the detection operation performed by the detecting device, and a graph of the detection signal, and show an abnormal detection state. The basic configuration in this embodiment is the same as that in the first and fourth embodiments described above, so those constituent elements that are shared with these embodiments will be numbered the same and will not be described again.

As shown in FIG. 13, the detecting device 10 in the fifth embodiment comprises an LED light source 15 that is a second light source. The LED light source 15 emits LED light R5 toward the midair image P (the detection region). The LED light source 15 is disposed opposite the light receiver 11 with the midair image P therebetween. Consequently, when there is no barrier to the midair image P, the LED light R5 emitted by the LED light source 15 is directly incident on the light receiver 11. The LED light source 15 is used in resuming normal detection operation after it has been detected that the user's head H, for example, has moved into the midair image P, and emission of the infrared laser beam by the irradiation component 20 has been halted.

The detecting device 10 has pre-stored in a memory or the like (not shown) the amount of light received by the light receiver 11 (see FIG. 15) when the LED light source 15 is lit and a relatively large detection target such as the user's head H is present in the midair image P, that is, when no detection target is detected. For instance, as shown in FIG. 14, if the user's head H moves into the midair image P, the LED light R5 received by the light receiver 11 is blocked by the head H. Specifically, the amount of light received by the light receiver 11 decreases as shown in FIG. 15 when the user's head H is detected.

On the other hand, when the user's head H is retracted from the midair image P, the amount of light received by the light receiver 11 changes to a state in which no detection target (such as the head H) is detected, as shown in FIG. 15. Therefore, if there is a disparity in the amount of light received by the light receiver 11, the main controller 12 causes the irradiation component 20 to resume normal emission of the infrared laser beam. The main controller 12 also turns off the LED light source 15.

As discussed above, the detecting device 10 has the LED light source 15 disposed opposite the light receiver 11 with the midair image P (a specific detection region) in between. With this configuration, in order to resume normal emission of the infrared laser beam by the irradiation component 20, the detecting device 10 can utilize the LED light source 15, which is an extra light source, to detect that the user's head H, for example, has retracted from the midair image P (the detection region). Therefore, normal detection operation can be resumed even more quickly.

When a light source that emits visible light is used for the LED light sources 13 and 15, which are the second light sources, in the fourth and fifth embodiments, the light from the LED light sources 13 and 15 gives the user a warning that his head H has moved into the midair image P.

### SIXTH EMBODIMENT

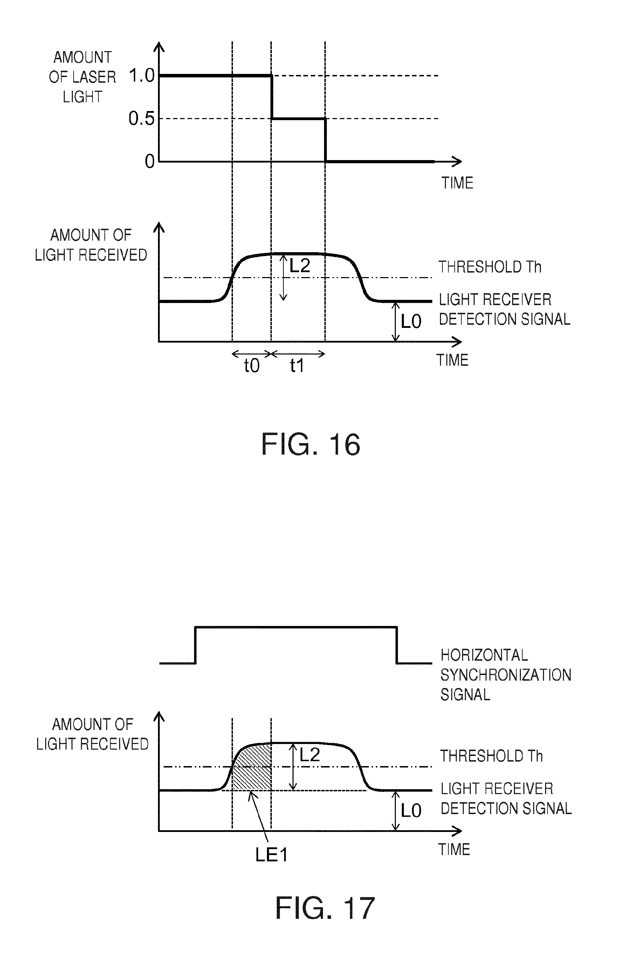

Next, the configuration of the detecting device in the sixth embodiment of the present invention will be described through reference to FIG. 16. FIG. 16 is a graph of the detection signal and the amount of laser light of the detecting device. The basic configuration of this embodiment is the same as in the first embodiment already described, so those constituent elements that are shared with the first embodiment will be numbered the same and not described again.

The detecting device 10 in the sixth embodiment is such that the main controller 12 controls the irradiation component 20 to reduce the amount of laser light emitted by the infrared LD 31 when, for example, the user's head H moves into the midair image P (a specific region) (see FIG. 5), and the reception time in which reflected light R2 is continuously received, with the amount of received light over a threshold Th, by the light receiver 11 goes past a specific length of time t0, as shown in FIG. 16.

Specifically, if we let the proportion of the laser light emitted by the infrared LD 31 in order to detect an input operation with the input device 1 be 1.0, then when the reception time of the reflected light R2 beyond the threshold Th has exceeded the specific length of time t0, the main controller 12 reduces the proportion of the amount of laser light of the infrared LD 31 by half, for example, to 0.5. After this, if the reception time of the reflected light R2 beyond the threshold Th has reaches the specific length of time t1, the main controller 12 performs control to stop the emission of the infrared laser beam from the irradiation component 20 (proportion of the amount of laser light = 0).

If the amount of light received by the light receiver 11 drops below the threshold Th before the specific length of time t1 has elapsed since the proportion of the amount of laser light of the infrared LD 31 is cut in half to 0.5, the main controller 12 stops its control in which the amount of laser light emitted by the infrared LD 31 is halved, and performs control to return it to the original amount of laser light.

The proportion of the amount of laser light emitted by the infrared LD 31 was reduced in two stages from 1.0 to 0.5 and then to zero, but the reduction is not limited to two steps, and the proportion may be reduced in three or more steps instead. Also, the specific length of time t1 for measuring the timing at which the proportion of the amount of laser light is reduced may be different from the specific length of time t0, or it may be the same.

### SEVENTH EMBODIMENT

Next, the configuration of the detecting device in the seventh embodiment of the present invention will be described through reference to FIG. 17. FIG. 17 is a graph of the detection signal of the detecting device, and shows an abnormal detection state. The basic configuration of this embodiment is the same as in the first embodiment already described, so those constituent elements that are shared with the first embodiment will be numbered the same and not described again.

In the detection of a detection target with the detecting device 10 in the seventh embodiment, the main controller 12 performs computation to add up the amount of light received beyond a suitable natural light L0, in relation to the detection signal of the light receiver 11. As shown in FIG. 17, if the amount of light received by the light receiver 11 is over the threshold Th, the main controller 12 determines whether or not the subsequent cumulative amount of light received LE1 exceeds a specific predetermined amount.

The main controller 12 identifies a detection target based on the specific cumulative amount of light received LE1 corresponding to the detection of an object of about the size of a fist, which is larger than a finger F, stylus, or other such indicator. This specific cumulative amount of light received LE1 is stored ahead of time in a memory or the like (not shown), and can be changed as needed.

If, for example, the user's head H moves into the midair image P (the detection region) (see FIG. 5), the amount of light received by the light receiver 11 goes over the threshold Th, and the cumulative amount of light received LE1 of the continuously received reflected light R2 exceeds a specific amount, the main controller 12 performs control (the operation control) to stop the emission of infrared laser light by the infrared LD 31 of the irradiation component 20, or to reduce the amount of laser light emitted by the infrared LD 31.

As discussed above, with the detecting device 10, the specific criterion with respect to the reflected light R2 of the infrared laser beam received by the light receiver 11 includes the cumulative amount of light received LE1, which is the amount of light received by the light receiver 11. With this configuration, the fact that the user's head H has moved into the midair image P can be detected based on the cumulative amount of light received LE1 of the light receiver 11, and the emission of the infrared laser beam can be quickly halted.

### EIGHTH EMBODIMENT

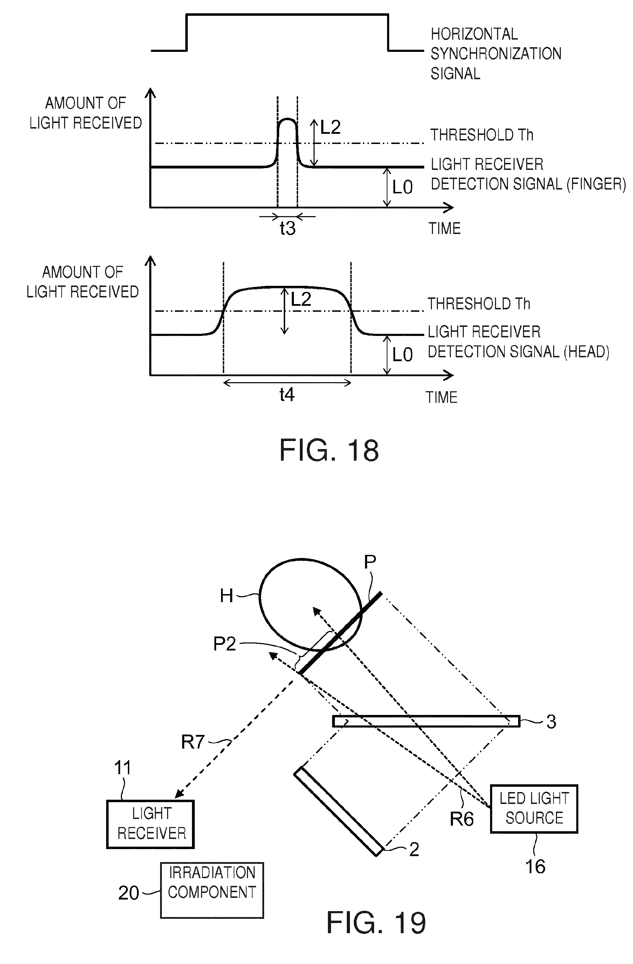

Next, the configuration of the detecting device in the eighth embodiment of the present invention will be described through reference to FIG. 18. FIG. 18 is a graph of the detection signal of the detecting device, and shows an abnormal detection state. The basic configuration of this embodiment is the same as in the first embodiment already described, so those constituent elements that are shared with the first embodiment will be numbered the same and not described again.

With the detecting device 10 in the eighth embodiment, if two or more groups of reflected light R2 (a plurality of beams of light) are reflected in a specific region (the midair image P), the main controller 12 controls the operation (performs the operation control) of the irradiation component 20 based on the reflected light R2 that satisfies a specific criterion out of the plurality of groups of reflected light R2 received by the light receiver 11.

For instance, if there are two groups of reflected light R2 reflected by the midair image P and received by the light receiver 11, the result is the state shown in FIG. 18. The upper detection signal in FIG. 18 is the finger F, and the lower detection signal is the head H. In this case, the main controller 12 performs control to stop the emission of infrared laser light by the infrared LD 31 of the irradiation component 20, or to reduce the amount of laser light emitted by the infrared LD 31, based on the head H, which is the detection target that has been detected for a longer time out of the reception times t3 and t4 of the two groups of continuously received reflected light R2 in which the amount of light received by the light receiver 11 is over the threshold Th.

As discussed above, when there are two or more groups of reflected light R2 of the infrared laser beam reflected by the midair image P (a specific region), the main controller 12 controls the operation of the irradiation component 20 based on the reflected light R2 that satisfies a specific criterion out of the plurality of groups of reflected light R2 received by the light receiver 11, that is, the reflected light R2 with the longer reception time (t4). With this configuration, even though there are two or more groups of reflected light R2 reflected by the midair image P, it can be detected that the user's head H has moved into the midair image P. Therefore, the detecting device 10 can quickly stop the emission of infrared laser light, or reduce the amount of laser light. As a result, it is less likely that an infrared laser beam will go into the user's eyes for an extended period of time.

The cumulative amount of light received by the light receiver 11 may be used, as in the seventh embodiment, as the specific criterion with respect to the light received by the light receiver 11.

### NINTH EMBODIMENT

Next, the configuration of the detecting device in the ninth embodiment of the present invention will be described through reference to FIG. 19. FIG. 19 is a diagram illustrating the detection operation performed by the detecting device. The basic configuration of this embodiment is the same as in the first and fourth embodiments already described, so those constituent elements that are shared with these embodiments will be numbered the same and not described again.

As shown in FIG. 19, the detecting device 10 in the ninth embodiment comprises an LED light source 16, which is a second light source. The LED light source 16 may be disposed at a different position from that of the LED light source 13 that served as the second light source in the fourth embodiment, or the LED light source 15 that served as the second light source in the fifth embodiment, and may be disposed at a different position from that shown in FIG. 19.

The LED light source 16 emits LED light R6 toward the midair image P (a specific detection region). Only a region P2, which is a part of the midair image P, is irradiated with the LED light R6 of the LED light source 16. The reflected light R7 of the LED light R6, which is reflected by the detection target in the region P2 when the detection target (such as the user's head H) moves into the midair image P, is incident on the light receiver 11.

With this configuration, the LED light source 16, which is a second light source, can be disposed in a variety of locations, and a detection target that moves into the midair image P (a specific region) can be detected more accurately. Furthermore, the region P2 can be set to the lower region of the midair image P, for example, so as not to affect the eyes of the user.

### TENTH EMBODIMENT

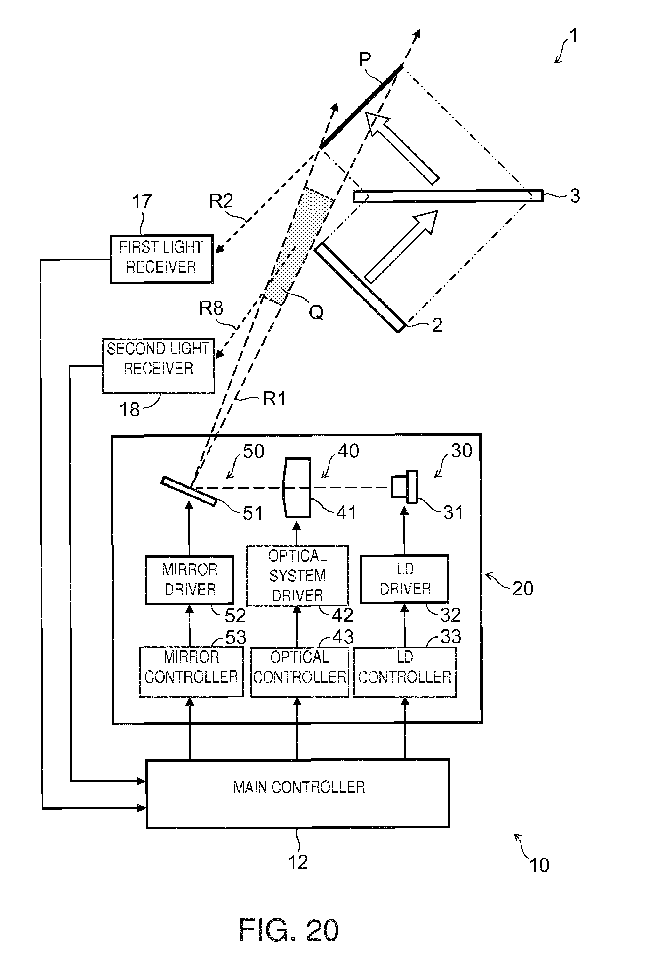

Next, the configuration of the detecting device and input device in the tenth embodiment of the present invention will be described through reference to FIG. 20. FIG. 20 is a simplified diagram of the input device. The basic configuration of this embodiment is the same as in the first embodiment already described, so those constituent elements that are shared with the first embodiment will be numbered the same and not described again.

As shown in FIG. 20, the detecting device 10 in the tenth embodiment comprises a first light receiver 17 and a second light receiver 18. The first light receiver 17 receives natural light from the environment in which the input device 1 is installed, and reflected light R2 at the midair image P of a scanning laser beam R1 that is emitted from the irradiation component 20 toward the midair image P. The second light receiver 18 receives receives natural light from the environment in which the input device 1 is installed, and reflected light R8 in a region Q of the scanning laser beam R1 emitted from the irradiation component 20 toward the midair image P. The region Q is set as a region other than the midair image P (a specific region).

The first light receiver 17 and the second light receiver 18 convert the incident light into an electrical signal and output the result. The electrical signals outputted by the first light receiver 17 and the second light receiver 18 are sent to the main controller 12.

As discussed above, the detecting device 10 comprises the first light receiver 17, which receives the reflected light R2 of the infrared laser beam reflected by the midair image P (a specific region), and the second light receiver 18, which receives the reflected light R8 of the infrared laser beam reflected in the region Q (a region other than the midair image P). With this configuration, when a detection target moves into a region other than the midair image P, that is, when the head H moves into the region Q (a region other than the midair image P), this can be detected. Therefore, safety can be further improved, so that light used to detect a detection target does not go into the user's eyes for an extended period of time.

Embodiments of the present invention were described above, but the scope of the present invention is not limited to or by these, and various modifications are possible without departing from the gist of the invention.

For example, what the detecting device 10 is applied to is not limited to a device such as the input device 1, and the detecting device 10 can also be applied to other kinds of input devices and the like.

The present invention can be utilized in detecting devices and in input devices equipped with these detecting devices.

The detecting device of the present invention comprises an irradiation component that includes a first light source and is configured to irradiate a specific region with light from a first light source, a light receiver that is configured to receive light reflected in the specific region, and a controller that performs an operation control of the irradiation component based on a specific criterion with respect to the light received by the light receiver.

For example, the detecting device of the present invention comprises a first light source that is configured to emit light, an irradiation component that is configured to irradiate a specific detection region in the air for detecting a detection target with the light from the first light source, a light receiver that is configured to receive the light from the first light source that has been reflected by the detection target that has entered the detection region, and a controller that is configured to control the operation of the first light source and the irradiation component, the controller being configured to limit light irradiation by the irradiation component when a light reception time, during which the light from the first light source is continuously received by the light receiver, exceeds a predetermined specific length of time.

With this configuration, the detecting device detects a finger or other such relatively small indicator as the detection target when the reception time in which light from the first light source is continuously received is at or under a predetermined specific length of time. The specific length of time here is set to be the time it takes to detect an object the size of a fist that is larger than a finger, a pointer, or another such indicator. If the reception time exceeds this specific length of time, the detecting device detects that a relatively large object, that is, the head of the user, has entered the detection region, and limits the irradiation with light by the irradiation component, such as halting irradiation with light. Therefore, the detector quickly halts irradiation with light if the user's head moves into the detection region. As a result, it is less likely that light from the first light source will go into the user's eyes for an extended period of time.

With the detecting device configured as above, the irradiation component is configured to use the light of the first light source to perform an optical scan with respect to the specific region, and the controller is configured to perform the operation control of the irradiation component when a specific criterion with respect to the light received by the light receiver has been satisfied in a plurality of optical scans by the irradiation component.

For example, the irradiation component uses the light of the first light source to scan the detection region, and the controller limits light irradiation by the irradiation component when the light reception time of the light receiver exceeds the specific length of time in a plurality of optical scans by the irradiation component.

With this configuration, the detection accuracy of the detecting device is improved. Therefore, mis-detection is less likely, and it can be detected more accurately when the user's head moves into the detection region.

With the detecting device configured as above, the controller is configured to cause the irradiation component to irradiate a range that is smaller than the specific region.

With the detecting device configured as above, the controller is configured to release the operation control of the irradiation component when a specific criterion with respect to the light received by the light receiver has been satisfied.

For example, the controller causes the irradiation component to irradiate a range that is smaller than the ordinary detection region in the limiting of irradiation with light by the irradiation component, and resumes ordinary irradiation with light by the irradiation component if the light reception time of the light receiver is at or under the specific length of time.

With this configuration, the detecting device detects that the user's head has moved into the detection region, and after light irradiation by the irradiation component is limited (such as halting the irradiation with light), the device waits for the head to move back out of the detection region, and then resumes ordinary light irradiation by the irradiation component. Therefore, safety is enhanced and the ordinary detection operation is resumed more quickly.

The detecting device configured as above further comprises a second light source that is configured to emit light toward the specific region or direct light toward the specific region so that it will be incident on the light receiver, the controller being configured to turn on the second light source when performing the operation control of the irradiation component, and the controller being configured to release the operation control of the irradiation component and to turn off the second light source if there is a disparity in an amount of light of the first light source received by the light receiver.

With the detecting device configured as above, the second light source is disposed outside of the irradiation component at a different location from that of the first light source.

With the detecting device configured as above, the second light source is disposed opposite the light receiver with the specific region therebetween.

With this configuration, the detecting device uses the second light source (another light source) to detect that the user's head has been pulled back out of the detection region, for example, in order to resume ordinary light irradiation by the irradiation component. Therefore, the ordinary detection operation can be resumed even more quickly.

Also, with the detecting device configured as above, the operation control of the irradiation component includes reducing an amount of light emitted by the irradiation component.

Also, with the detecting device configured as above, the operation control of the irradiation component includes stopping emission of light by the irradiation component.

Also, with the detecting device configured as above, the operation control of the irradiation component includes stopping emission of light by the irradiation component after reducing an amount of light emitted by the irradiation component.

Also, with the detecting device configured as above, the specific criterion with respect to the light received by the light receiver includes a light reception time of the light receiver.

Also, with the detecting device configured as above, the specific criterion with respect to the light received by the light receiver include a cumulative amount of light received by the light receiver.

Also, with the detecting device configured as above, if a plurality of beams of light has been reflected in the specific region, the controller is configured to perform the operation control of the irradiation component based on light that satisfies a specific criterion out of the plurality of beams of light received by the light receiver.

Also, the detecting device configured as above comprises a first light receiver that is configured to receive light reflected in the specific region, and a second light receiver that is configured to receive light reflected in a region other than the specific region.

The present invention is also the above-mentioned detecting device that has been installed in an input device.

With this configuration, light from the first light source is less likely to go into the user's eyes for an extended period of time with the input device. Furthermore, since light from the first light source can also be used for input operations, the light source can be utilized more efficiently.

The configuration of the present invention provides a detecting device with improved safety, such that light used for detecting a detection target will not go into the user's eyes for an extended period of time, as well as an input device that is equipped with this detecting device.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A detecting device comprising:
an irradiation component including a first light source and configured to irradiate a specific region with light from the first light source;
a light receiver configured to receive light reflected in the specific region; and
a controller configured to perform an operation control of the irradiation component based on a specific criterion with respect to the light received by the light receiver.

2. The detecting device according to claim 1, wherein
the irradiation component is configured to use the light of the first light source to perform an optical scan with respect to the specific region, and
the controller is configured to perform the operation control of the irradiation component when a specific criterion with respect to the light received by the light receiver has been satisfied in a plurality of optical scans by the irradiation component.

3. The detecting device according to claim 1 or 2, wherein
the controller is further configured to release the operation control of the irradiation component when a specific criterion with respect to the light received by the light receiver has been satisfied.

4. The detecting device according to any one of claims 1 to 3, further comprising
a second light source configured to emit light toward the specific region, wherein the controller is further configured to turn on the second light source when performing the operation control of the irradiation component, and
the controller is further configured to release the operation control of the irradiation component and configured to turn off the second light source if there is a disparity in an amount of light of the first light source received by the light receiver.

5. The detecting device according to claim 4, wherein
the second light source is disposed outside of the irradiation component at a different location from that of the first light source.

6. The detecting device according to claim 4 or 5, wherein
the second light source is disposed opposite the light receiver with the specific region therebetween.

7. The detecting device according to any one of claims 1 to 6, wherein
the operation control of the irradiation component includes reducing an amount of light emitted by the irradiation component.

8. The detecting device according to any one of claims 1 to 6, wherein
the operation control of the irradiation component includes stopping emission of light by the irradiation component.

9. The detecting device according to any one of claims 1 to 6, wherein
the operation control of the irradiation component includes stopping emission of light by the irradiation component after reducing an amount of light emitted by the irradiation component.

10. The detecting device according to any one of claims 1 to 9, wherein
the specific criterion with respect to the light received by the light receiver includes a light reception time of the light receiver.

11. The detecting device according to any one of claims 1 to 9, wherein
the specific criterion with respect to the light received by the light receiver includes a cumulative amount of light received by the light receiver.

12. The detecting device according to any one of claims 1 to 11, wherein
if a plurality of beams of light have been reflected in the specific region, the controller is configured to perform the operation control of the irradiation component based on light that satisfies a specific criterion out of the plurality of beams of light received by the light receiver.

13. The detecting device according to any one of claims 1 to 12, wherein
the controller is further configured to cause the irradiation component to irradiate a range that is smaller than the specific region.

14. The detecting device according to any one of claims 1 to 13, further comprising
a first light receiver configured to receive light reflected in the specific region, and
a second light receiver configured to receive light reflected in a region other than the specific region.

15. An input device comprising:
the detecting device according to any one of claims 1 to 14.
